# EUROPEAN PATENT SPECIFICATION

(11) **EP 1 806 902 B1**
(45) Date of publication and mention of the grant of the patent: **25.06.2008**
(21) Application number: 06290062.6
(22) Date of filing: 10.01.2006
(51) Int. Cl.: H04L 29/06

(54) **Method and login server for providing a user with a centralised login procedure**
Verfahren und Zugangsserver, um einen Benutzer eine zentrale Anmeldungsprozedur bereitzustellen
Méthode et serveur d'entrée pour mettre en place une procédure d'authentification centralisée pour un utilisateur

(43) Date of publication of application: 11.07.2007
(73) Proprietor: Alcatel Lucent, 75008 Paris (FR)
(72) Inventor: Penet, Xavier, 67400 Illkirch Cedex (FR); Pfleger, Nicolas, 67400 Strasbourg (FR)
(74) Representative: Schmidt, Werner Karl

(56) References cited:
- EP-A- 1 445 679
- EP-A- 1 531 596
- WO-A-01/33339
- US-A1- 2003 140 146
- US-A1- 2005 091 338

## Description

The present invention relates to a method and a login server for providing a user with a centralised login procedure.

There is a growing trend for users to own a multitude of devices to fulfil their communication needs. Even today, it is common to have a PC, a PDA and a mobile phone (PC = Personal Computer; PDA = Personal Digital Assistant). All these devices require some kind of authentication, e.g., a user ID and a password, when powered on (ID = Identification). Consequences are that users have to remember all these login information and spend time to log in to each device.

A solution for a somewhat different issue are the so-called Single Sign On (= SSO) servers. A user has to log in only once at a SSO server and is then provided access to a plurality of servers. Therefore, SSO solutions answer to the problem of one device that has to access many servers through one single login.

US 2003/0140146 A1 describes a method and a system for securely and quickly interconnecting a web server with a portable wireless communications device. The method provides a gateway coupled to the server. The gateway includes a database for storing a plurality of active session data uniquely identifying each of a plurality of users authorized to gain access to the server. The method allows to transmit a present transaction request including a unique identifier from the wireless device to the gateway. The method further allows to relate the present transaction request against the active session data in the database to determine whether or not the unique identifier in the transaction request matches a respective active session data. In the event no match of the transaction request against any active session data is determined, the method allows to transmit a login screen so that, upon the user providing authentication credentials through the login screen, the user can proceed with the transaction request. In the event a match is determined, the method permits the user to proceed through the transaction request without the user having to reenter the authentication credentials.

US 2004/0153656 A1 is directed to a method and system for use in security authentication in a network environment. The method applies to a computing environment and maintains security and access to a plurality of networked devices. The method comprises the steps of accepting a user ID, assigning a surety level to said user ID, and utilising said user ID in conjunction with said surety level to grant or deny access to a plurality of networked devices.

A system utilizing a personal security device to provide access to a computer terminal is described by the document US 2005/0091338 A1, where the personal security device includes circuitry and transceiver components for transmitting identification information and exchanging other digital information with a computer terminal and other compatible devices. The personal security device establishes a communication link with a computer terminal to allow a user to logon to the terminal. When a user leaves the computer terminal, the communication link is terminated, causing the computer terminal to lock the keyboard, blank the monitor, and/or logoff the user if the communication link is not restored within a sufficient time period. The personal security device also allows to facilitate subsequent computer access within a time range by providing time related access codes to the terminal that can be used to reestablish computer terminal access.

It is the object of the present invention to provide a user with a centralised login at a login server.

The object of the present invention is achieved by a method of providing a user with a centralised login procedure according to claim 1. The object of the present invention is further achieved by a login server for providing a user with a centralised login procedure according to claim 8.

The present invention allows a user to log on only one device and have the authentication related to the login automatically propagated to his other devices registered at the login server. By means of the present solution, the user saves time and has to remember and present, respectively, only one set of login data, e.g., one user ID and password.

The present invention solves the problem of one user accessing many devices through one single login, whereby a simple management of devices is provided. A user does not have to remember to log out at all his devices, e.g., when leaving the company after business hours.

By means of the present solution, the notion of the "user", which represents a central piece of modern communications architectures, is expanded to the login procedure of devices. The solution simplifies the security data management for the users and strengthens the overall security policy of a communication system.

Further advantages are achieved by the embodiments of the invention indicated by the dependent claims.

According to a preferred embodiment of the invention, a biometric identification method is used in the first login procedure. The biometric identification method may consist of the user putting his finger on a fingerprint sensor attached to one of his devices. Or, the user may look into a camera which reads his iris pattern.

Or, the user may speak a predefined sentence into a microphone which records the characteristics of his voice. The solution described here allows the user to authenticate via biometrics, preferably plus a password, on only one device. The user does not have to re-authenticate on the other devices. If a communication system uses the improved security level of a password in addition to the biometrics data, the user has just to remember and manage one single password.

The biometric authentication is performed between the biometric device coupled to a communication device of the user and the central login server. Preferably, the password used for this strong authentication is a password belonging to the central server, only. The password follows rules depending on the central login server policy, only.

According to another preferred embodiment of the invention, one of the other devices of the user sends a login request message to the login server when said other device is switched on. By means of the login request message, authentication of the user associated with the device is requested. Triggered by said login request message, the login server checks whether the user has logged on to the first device, i.e., whether the user has been positively authenticated during the first login procedure. Preferably, this information is registered in a memory of the login server.

If the login server finds that the user has been authenticated for the first device, the login server sends a message as a response to the login request message to said other device. The response message comprises credentials associated with the user for said other device. The other device uses the received credentials, e.g., user ID and password, to unlock itself and become fully functional. If no authentication of the user for the first device is registered, the login server may not send any response or send a negative reply to the device requesting login. Consequently, the device remains locked.

According to another preferred embodiment of the invention, the login server sets an active session associated to the user if the user is authenticated for the first device. The active session may be registered, e.g., in the memory of the login server. As described above, one of the other devices of the user sends a login request message to the login server when said other device is switched on. The login server then checks whether an active session for the user exists.

If the login server finds that an active session is registered or exists, respectively, for the user who is registered as associated to the device the login request message was received from, the login server sends a message as a response to the login request message to said other device. The response message comprises credentials associated with the user for said other device. The other device uses the received credentials, e.g., user ID and password, to unlock itself and become fully functional. If no active session exists, the login server may not send any response or send a negative reply to the device requesting login. Consequently, the device remains locked.

Said credentials are pieces of information or data which are used to control or change an activity state of a device, e.g., to unlock a locked device. The credentials are associated to a user and a device of the user. The credentials are administered by the login server and transmitted to the associated device in response to a trigger, e.g., triggered by the power-on of the device. Preferably, the credentials are not known to the user and are used only in the internal communication between the login server and the devices. In this case, the credentials may be any digital information. However, one can also think of solutions according to the invention where the credentials are also known to the user and can be set, used and changed by the user. In this case, the credentials preferably are digital information easy to remember for a user, e.g., a login ID and/or a password.

In a preferred embodiment, the login server initiates an active session associated to the user if the user is authenticated for the first device. One or more of the unlocked devices may repeatedly send to the login server an activity report. The activity report may comprise the information that the device is fully functional and that the user is logged on to it. The activity reports received by the login server may be used to confirm the active session of the user existing in the login server. Then, the login server may hold the session of the user active as long as the active session is confirmed by receipt of said activity reports.

It is possible that the active session of a user is set to terminate after a predefined period after the intial authentication of the user at the login server. For example, the active session is set to remain half an hour active and terminate after the half an hour has passed. Once an active session of a user terminates, the login server may log off all devices associated with the user. Thus, it may be prevented that one or more devices remain unlocked for a long time although their associated user is not present any more.

The activity signs of a user, e.g., the pressing of keys on a keyboard, may be registered by the device and used to generate an activity report which is sent to the login server. The login server, upon receipt of an activity report, resets a clock measuring the passed session activity time back to zero. Therefore, as long as s user is actively working at one of his devices, he can be sure to have all his switched-on devices ready for use. At the same time, a safety measure is provided to prevent an unauthenticated user to re-use a device of an authenticated user.

According to another preferred embodiment of the invention, the login server automatically logs out all devices of the two or more devices when the associated user logs out at one device of the two or more devices. Therefore, there is no need, e.g., for an office worker to separately log off at all devices he has been using during the day when he leaves the office at closing hour. It is sufficient for the user to log off at one of the unlocked devices, e.g., at the last used device or a device just near him. The login server then triggers the log-off of all related devices. For the user, this saves time and facilitates his work. For the communication system comprising the devices of the user, the security level is increased.

Preferably, a device associated with the user may periodically send an inquiry to the login server. The inquiry requests the login server to check whether an active session exists for the user associated with the device. If an active session exists on the login server, the login server sends, as a response to the inquiry, the credentials needed by the device to unlock the device for the user. If no active session exists, the login server may not send any response or send a negative reply to the inquiring device. Consequently, the device remains locked.

Preferably, the login server generates random credentials for the other devices. The login server, preferably periodically, replaces the credentials currently associated with the user for one of the two or more devices by the randomly generated credentials. The login server may send the generated credentials to the device together with an indication that the sent credentials are the new credentials and that the previously credentials are to be erased. The randomly generated credentials are only known to the login server as it is the login server that has selected it, preferably using a random password generator. It is the responsibility of the central login server to manage the credentials of the devices. It takes on the renewal, e.g., when requested by the devices. The user no more has to periodically change all of his passwords. The central login server performs the periodical change of the passwords on his behalf. The randomly generated passwords are harder to guess.

According to another preferred embodiment of the invention, the login server comprises a credentials generation unit to generate credentials for a device of the two or more devices. The credentials generation unit may comrprise a random number generator, a control unit and a memory. The control unit initiates and controls the generation of a new credential. The random number generator generates random numbers which may be translated by means of ASCII tables into numbers and characters (ASCII = American Standard Code for Information Interchange). The memory stores settings needed for the generation of the credentials, e.g., the length of a credential needed for a specific device.

These as well as further features and advantages of the invention will be better appreciated by reading the following detailed description of presently preferred exemplary embodiments taken in conjunction with accompanying drawings of which:
- Fig. 1: is a block diagram of a communication system according to an embodiment of the invention.
- Fig. 2: is a message flow diagram showing a communication between devices and a login server according to an embodiment of the invention.
- Fig. 3: is a message flow sequence describing internal processing steps in a login server according to an embodiment of the invention..
- Fig. 4: is a block diagram of a communication system according to an another embodiment of the invention.

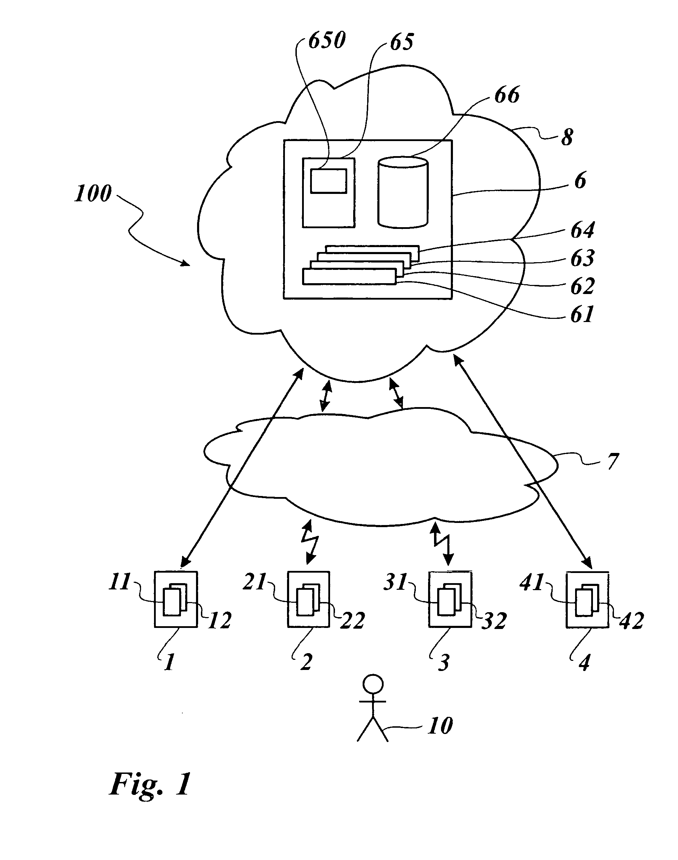

Fig. 1 shows a communications system 100, comprising a plurality of communication networks 7 and 8, a multitude of devices 1, 2, 3 and 4, and a login server 6 deployed in one communication network 8 of the plurality of communication networks 7 and 8. The communication networks 7 and 8 may comprise conventional wireline telecommunication networks such as the POTS, mobile telecommunications networks such as the GSM, IP based communications networks such the Internet, and proprietary and/or local communication networks such as PABX networks (POTS = Plain Old Telephone Service; GSM = Global System for Mobile Communications; PABX = Private Automated Branch Exchange).

The devices 1, 2, 3 and 4 are assigned to a user 10 who uses the devices 1 to 4 for telecommunication purposes, i.e., for sending and receiving electronic messages via the telecommunication networks 7 and 8. The device 1 is an IP terminal, the device 2 is a PDA, the device 3 is a GSM phone with Wi-Fi connectivity, and the device 4 is a laptop computer (IP = Internet Protocol; Wi-Fi = Wireless Fidelity). Each of the devices 1 to 4 comprises a control unit 11, 21, 31, 41 and a device memory 12, 22, 32, 42. In the case of the GSM phone device 3, the device memory 32 may be represented by a SIM card (SIM = Subscriber Identification Module).

The devices 1 to 4 are connected via the telecommunication networks 7 and 8 to the central login server 6. The device 1 may be connected via an Ethernet connector to a LAN, the device 2 may be connected via a Bluetooth access point to the Internet, the device 3 may be connected via a Wi-Fi hot spot to a mobile telecommunication network, and the device 4 may be connected via a DSL connection to a wireline telecommunication network (LAN = Local Area Network; DSL = Digital Subscriber Line).

The login server 6 is deployed in one of the communication networks 7 and 8. The login server 6 is composed of one or several interlinked computers, i.e., a hardware platform, a software platform basing on the hardware platform and several application programs executed by the system platform formed by the software and hardware platform. The functionalities of the login server 6 are provided by the execution of these application programs. The application programs or a selected part of these application programs constitute a computer software product providing a login service as described in the following, when executed on the system platform. Further, such computer software product is constituted by a storage medium storing these application programs or said selected part of application programs.

From a functional view, the login server 6 comprises one or more interfaces 61 to 64, a control unit 65, and a memory unit 66. The login server 6 is adapted to control and provide the centralised login service according to the invention to one or more users 10. The interfaces enable the login server 6 to exchange data with the devices 1 to 4. The operational logic is comprised within the control unit 65. The control unit 65 comprises a credentials generation unit 650 for the generation of credentials under control of the control unit 65. The storing of data is provided by the memory unit 66 under control of the control unit 65. The memory unit 66 contains data sets for the one or more users 10 managed by the login server 6. Each user data set of a user 10 is made up of a login procedure, e.g., with a user's user ID and password, a list of all registered devices 1 to 4 associated with each user and the corresponding credentials for each of the registered devices 1 to 4.

The login server 6 may be operated by a provider of one of the communication networks 7, 8. Alternatively, the login server 6 may be operated by a provider who is independent of the communication network 7, 8 the login server 6 is deployed in. Then, the provider of the login server 6 may have signed a contract with the provider of the communication network 7, 8 the login server 6 is deployed in. Preferably, the login server 6 is a part of a business solution running in a proprietary environment, e.g., of a LAN of a firm.

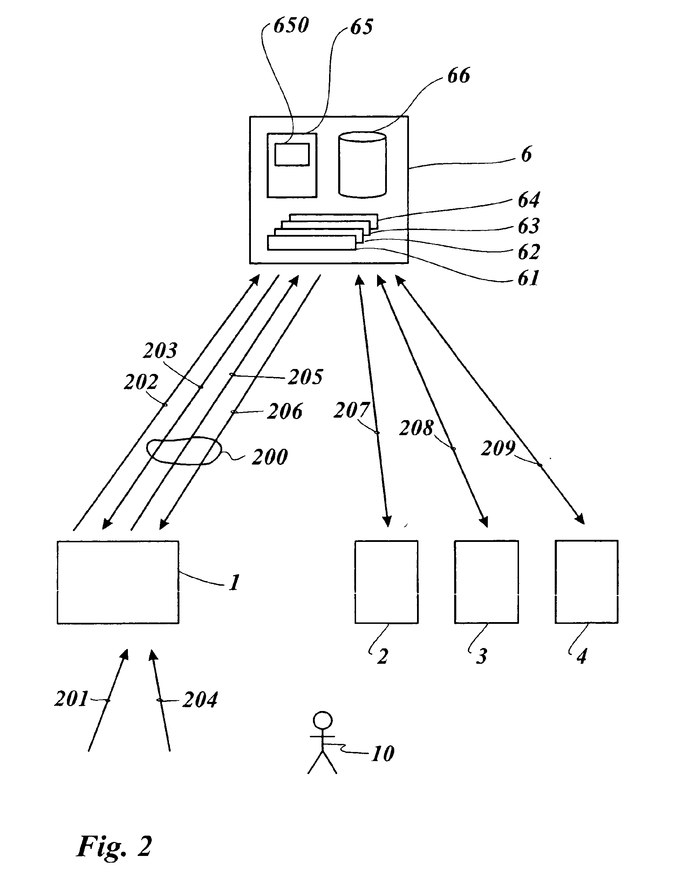

Fig. 2 gives an overview of the basic steps of the method according to an embodiment of the invention.

Let us assume that the user 10 has already registered each of the devices 1 to 4 at the login server 6. For example, each time the user 10 is provided with or buys, respectively, a new device 1 to 4, the user 10 sends a registration request to the login server 6, e.g., by dialling a specific telephone number or by accessing a dedicated web site. The user 10 may utilise an already registered device 1 to 4 to communicate with the login server 6. In case the user 10 wishes to register for the first time a new device 1 to 4, the required information on the user and device may be transmitted by postal mail to an operator of the login server 6, or a network operator may provide a first registration procedure via a website or a voice-based dialog. Such a first registration procedure with required authentication is known from the previous art.

Triggered by the received registration request, the login server 6 initiates a registration procedure. Before the login server 6 starts the registration procedure, the user may be prompted to input registration authentication data such as a user ID and a password associated to the registration procedure. The user 10 may have received the registration authentication data after or during the first contact with the login server from an operator of the login server. Thus, it may be prevented that an unauthorised user registers a new device 1 to 4 on behalf of another user. During the registration procedure, the user 10 is requested to provide the login server 6 with data related to the new device 1 to 4. For example, the login server 6 presents to the user 10 a voice based dialog and the user 10 provides all required information by voice. Likewise, the login server 6 starts a web based interaction application, and the user 10 is required to fill in a website form by means of input means such as a keyboard and a computer mouse.

The data required for the registration of a new device 1 to 4 at the login server 6 may comprise the type and the device number of the new device 1 to 4. This information may be stored in the memory 12, 22, 32, 42 of the device 1 to 4. Furthermore, the registration data may comprise preferred settings. For example, the user 10 may specify that the registered new device 1 to 4 may be managed by the login server 6 only on weekdays, whereas on weekends, the user 10 may be able to log on to the new device 1 to 4 without the interaction of the login server 6 on a conventional basis, e.g., by input of login data specific to the device and known to the user 10. All registration related data is stored in the memory unit 66 of the login server 6 for later access.

Let us further assume that the user 10 has just arrived at his office and wants to start work. The devices 1 to 3 assigned to the user 10 are switched off, the device 4 assigned to the user 10 may be already powered on but no one is logged in. First, the user wishes to use the device 1, i.e., the IP phone, to call someone. To log in at the first device 1 of the devices 1 to 4, the user 10 initiates a first login procedure on the first device 1. This may be done, in step 201, by powering on the first device 1, or by pressing a dedicated, pre-defined key on the first device 1 if the first device 1 is already in a standby mode. The device 1 may be adapted to send a login request signalling message 202 to the login server 6 when a specific user action, e.g., the pressing of a key is noticed. This may be achieved, e.g., by means of a program stored in the memory 12 of the device 1 and executed by the control unit 11 of the device 1. Thus, the user action is signalled as a login request signalling message 202 to the login server 6.

The login request signalling message 202 may trigger an application of the login server 6. The triggered application starts an applicative dialog 200 of the login server 6 with the first device 1. The dialog steps executed by the dialog may be perfomed by means of a program stored in the memory 12 of the device 1 and executed by the control unit 11 of the device 1. Within the framework of this dialog, the login server 6 sends a message 203 to the first device 1, which triggers the first device 1 to present a prompt to the user 10. For example, the text "Enter your user ID and your password." may be presented on a display of the first device 1. Alternatively, a corresponding voice announcement may be replayed to the user 10.

In an action 204, the user 10 enters his login data, e.g., his user ID and his password, into the first device 1. The user 10 may use a keypad on the first device 1 to enter the login data or he may speak the login information into a microphone of the device 1. The login data are sent as a message 205, preferably together with the device ID of the first device 1, from the first device 1 to the login server 6. For verification of the received login data, the control unit 65 of the login server 6 accesses the memory unit 66 where the valid user IDs and passwords of all users served by the login server 6 are stored as user data sets. If a match of the received user ID and the associated password can be found among the user data sets in the memory 66, the login of the user 10 is verified and the user 10 is authenticated.

It is possible that the login server 6 activates a session for the user 10 once the user 10 is authenticated by the login server 6. The session may consist of a data set listing the user ID of the authenticated user 10, the device ID of the first device 1 the login data was received from and the time and date of the authentication. In a preferred embodiment, the session also comprises the device IDs of all devices associated with the authenticated user 10. For example, the active session for the user 10 lists that the user 10 has been authenticated for the device 1 and is associated with the other locked devices 2 to 4. The active session is stored in the memory 66 for later access, preferably in the user data set of the user 10.

After the user 10 is established as an authorised user, the login server 6 searches into the user's 10 data set and returns the credentials expected by and associated to, respectively, the device 1 the initial login data was received from. The control unit 65 triggers that the credentials are sent as a message 206 to the first device. For example, for the device 1 represented by an IP terminal, a digital passcode of a call server is retrieved from the user data set. This passcode is returned from the login server 6 to the IP terminal device 1 which can use it to unlock itself. The first device 1 then turns fully functional.

From now on, the user 10 can take any other device 2, 3 registered in the login server 6 and associated with the user 10 and power it on. The device 2, 3 then simply checks the central login server 6. The devices 2 to 4 are provided with adapted login procedures to perform a dialog 207 to 209 with the login server 6. For example, for the PDA, GSM phone, and the laptop computer, respectively, corresponding adaptations are performed on a Windows^{®} OS, in a SIM card or in Java^{®}, or on a PocketPC^{®} OS, respectively (OS = Operating System). The corresponding OSs and programs may be stored in the device memories 12, 22, 32, 42 and be executed by the respective control units 11, 21, 31, 41.

The user 10 turns on his device 2, i.e., the PDA. Upon the boot process of the PCA device 2, the adapted login procedure starts the dialog 207 by sending a login request to the central login server 6. The login request comprises at least a device ID of the sending device 2 in order to permit the identification of the device 2 by the login server 6.

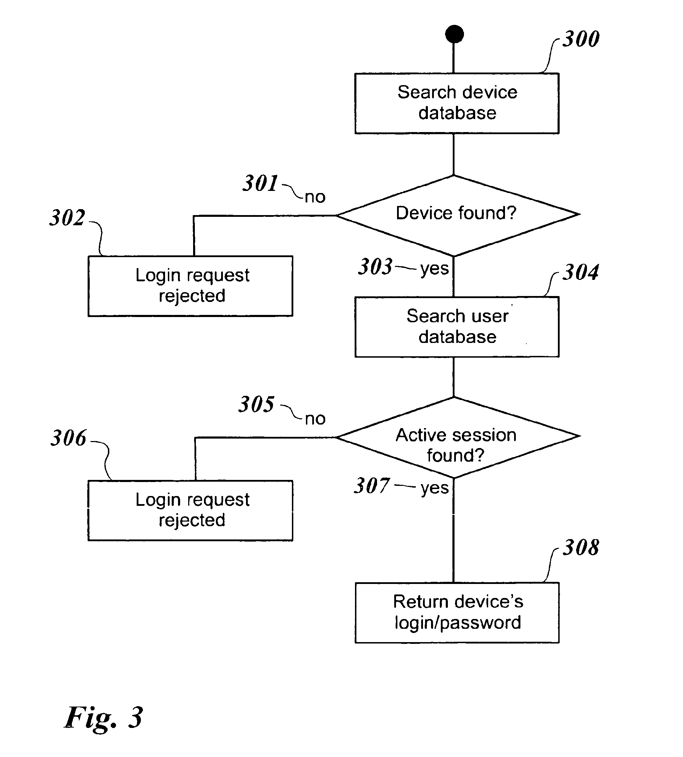

Fig. 3 shows a message flow sequence describing the Internal processing steps in the login server 6 after receipt of the login request. In a first step 300, the login server 6 accesses a device data base comprised within the memory 66. The device data base contains all devices 1 to 4 managed by the login server 6, preferably indexed according to the associated users 10 and/or their user IDs. The login server 6 searches the device data base for a data base entry matching the device ID of the device 2 the login request was received from. If no corresponding data base entry exists 301, the login request is rejected 302.

If a corresponding data base entry exists 303, the login server 6 determines the user 10 corresponding to the requesting device 2 and accesses, in a successive step 304, a user data base comprised within the memory 66. Preferably, the login server 6 searches the user data set of the determined user 10. If no active session exists 305, the login request is rejected 306. If an active session corresponding to the user 10 exists 307, the login server 6 determines the credentials, i.e., authentication data, expected by and associated to, respectively, the device 2 the login request was received from.

The login server 6 then sends - as a response to the login request received from the device 2 - the determined credentials to the device 2 which can use it to unlock itself. The device 2 then turns fully functional. For example, the PCA device 2 starts a regular pocket PC start-up. Thus, the dialog 207 between the PCA device 2 and the login server 6 is ended.

After that, the device 3, i.e., the GSM phone, may be switched on by the user 10. Upon the boot process of the device 3, the GSM phone device 3 executes a specific login procedure through Wi-Fi. The login procedure is stored in the device memory 32, e.g. the SIM card of the GSM phone device 3, or is a small Java program. Then, the login request of the GSM phone device 3 is handled by the central login server 6 as for the PCA device 2 described above. As an active session exists for the user 10 owning the device 3 performing the check, the login server 6 automatically returns to the device 3 the user's credentials, which will in turn allow this newly activated device 3 to go into service, too.

The device 4, i.e., the laptop computer, is already powered on but no one is logged in. A specific service, e.g., provided by means of a program that is started right after booting the laptop computer device 4 without requiring anyone to be logged in, is running and periodically checks the login server 6 for an active session of the user 10 associated with the device 4. The program may be stored in the device memory 42 of the device 4 and be executed by the control unit 41 of the device 4 to provide the service.

Every time the login server 6 receives the periodic inquiry, the login server 6 verifies whether an active session of the user 10 exists, e.g., is registered in the memory 66 of the login server 6. Again, once the user's session is active, the request of the laptop computer device 4 will be answered by the login server 6 with the credentials, e.g., a user ID and a password, required by the laptop computer device 4 to log the user 10 in. This in turn allows the laptop computer device 4 to become fully functional.

It is to be stressed that any of the registered devices 1 to 4 of the user 10 may be used by the user 10 as a "first" device. The user 10 is not restricted to use a specific device for initial login. Instead, every device 1 to 4 comprises the necessary hardware and functionality to act both as a "first" device used for initial login at the login server 6 and as a "successive" device which is automatically unlocked by the login server 6.

In a preferred embodiment, the unlocked devices 1 to 4 may periodically send activity reports to the login server 6 to indicate the current use by the user 10. The control unit 65 of the login server 6 may register the time of the authentication of the user 10 at the first device 1. The control unit 65 starts a clock for measuring a predefined time period, e.g., the clock measuring 2 hours from the time of authentication. If the user 10 does not actively work on the first device 1, no activity report is sent from the device 1 to the login server 6. For example, every ten minutes, an activity report is sent if the user 10 has actively worked during the last ten minutes. If the 2 hours have passed without receiving an activity report from the device 1, the login server 6 terminates the active session of the user 10 such that no new devices 2 to 4 can be logged on automatically when powered on.

Alternatively, the login server 6 even logs out the first device 1 after no activity report has been received from the first device during the preset time period. This may increase the security level within the centralised login system. For example, the user 10 logs on the first device 1, activates his computer laptop device 4 and is automatically logged into the computer laptop device 4. The user 10 makes a couple of phone calls through the first device 1 and is then called to join a conference. As the conference takes longer than originally thought, the user does not come back within 2 hours to his office. As the devices 1 and 4 do not register any user actions on the devices 1 and 4, no activity reports are sent to the login server 6. Therefore, the clock reports to the control unit 65 the passing of the 2 hours. The control unit 65 triggers that the user 10 is logged out at the device 4, or at all unlocked devices 1 and 4 associated to the user 10.

It is also possible that the user returns to the office after 90 minutes, and does some other phone calls. Then, an activity report is sent to the login server 6, and the clock may be reset to zero on the receipt of the activity report.

It is also possible that the user 10 is automatically logged off at all of his registered devices 1 to 4 if the user 10 logs off at any of his devices 1 to 4. This may increase the user-friendliness and the security level of the centralised login system. For example, the user 10 has been logged on at all his devices 1 to 4 by means of the login server 6. After work, the user logs off at the last used device 4. The login server 6 is triggered by the logoff process of the user 10 to determine all unlocked devices of the user 10. The login server 6 determines that the user is still logged in at the devices 1, 2 and 3. Then, the login server 6 automatically logs off the user at the the devices 1, 2 and 3. There is no need for the user 10 to initiate the logoff process for the devices 1, 2 and 3.

It is also possible that the user 10 is not automatically logged off at all the unlocked devices 1 to 4 but that the automatic logoff process is limited to a predefined set of devices. The corresponding definition may have been input by the user 10 at the registration process describes above. However, it is also possible that the user 10 accesses the login server 6 at any time by means of one of his devices 1 to 4 to modify the settings stored within his user data set.

In another preferred embodiment, the login server 6 may generate credentials by means of a credentials generation unit 650, preferably comprised within the control unit 65. Preferably, the credentials are randomly chosen so that the probability of an unauthorised user to guess the credentials is minimised. The generation of the credentials may be achieved, e.g., by means of a random number generator or any other random generator. Methods to generate random and secure credentials are known from the previous art.

The generation may be triggered from the devices 1 to 4, by the user 10, or may automatically be performed by the login server 6 on a periodic basis. Preferably, the login server 6 generates credentials which are needed to automatically unlock the devices 1 to 4 of the user 10 once the user 10 is authenticated at the login server 6. These credentials are only known to the login server 6 and the respective devices 1 to 4. The user 10 is absolutely not involved in the acts of generating, distributing and using the credentials. Therefore, the randomly generated credentials are very secure.

It is also possible that the login server 6 automatically and on a regular basis, e.g., every six weeks, sends new login data to the user 10 when the user 10 has been logged in at his first device 1. The login data are to be used to become authenticated by the login server 6. Then the user may choose to accept the proposed new login data, e.g., a user ID and/or a password, or to keep the old data. This way, the user 10 is incited to change the login data needed for authentication at the login server 6 regularly.

According to another preferred embodiment, a biometric sensor is used to perform a strong user authentication at the login server 6. The authentication method based on biometric sensors according to the present embodiment is much more efficient and trustworthy than common methods relying on a user ID and a password.

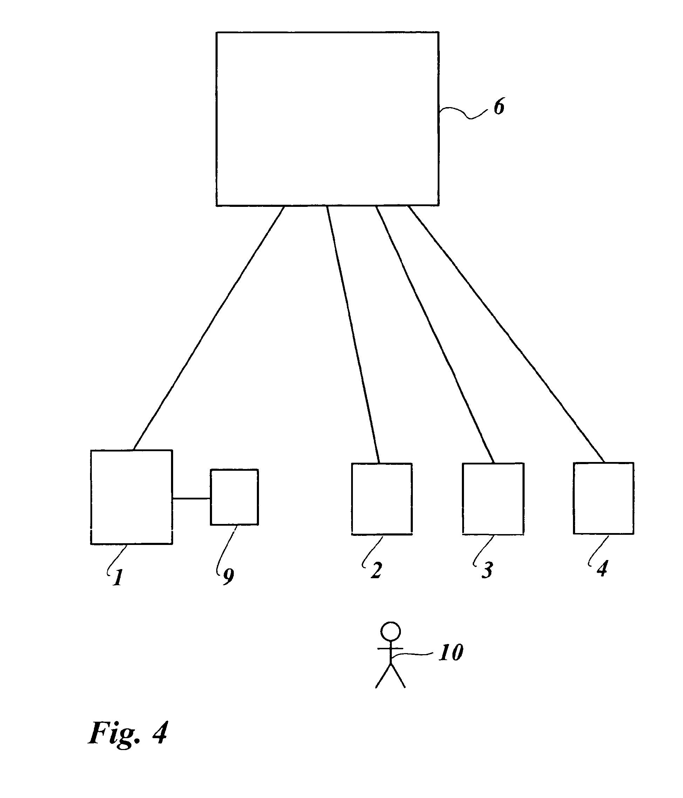

Fig. 4 shows the login server 6 and the devices 1 to 4 associated to the user 10. The user's device 1 is provided with a biometric sensor 9. The user data set stored in the login server 6 contains a biometric login program and biometric data of the user 10. To log in, the user 10 takes his device 1 equipped with the biometric sensor 9 and logs on it. For example, the device 1 is an IP terminal with a fingerprint sensor 9. The user 10 puts his finger on the fingerprint sensor 9. This starts an applicative dialog with the login server 6. The fingerprint is read by the sensor 9, converted to electronically processable data, and the data is transmitted to the login server 6. The login server 6 sends the text "Enter your PIN code." on the IP terminal device 1 (PIN = Personal Identity Number).

The user 10 dials the digits of the PIN and validates the input by pressing a confirmation key. The login server 6 checks the received electronic fingerprint data and the PIN of the user 10. If a matching data base entry is found in the memory 66, the user 10 is authenticated by the login server 6. Preferably, a session is activated for the user 10.

The following procedure is in analogy to the procedure described above. From now on, the user 10 can take any other device 2 to 4 registered in the login server 6 and associated with the user 10 and switch it on. The device 2 to 4 then simply checks the central login server 6. If the user 10 is authenticated - preferably this is checked by the existence of an active session - the device 2 to 4 receives the credentials to unlock itself and turn fully functional.

This way, it is possible to extend the high security level provided by biometric authentication also to other devices 2 to 4 of a user although the other devices 2 to 4 may not be adapted to be connected to a biometric sensor. All devices benefit from the strong authentication. There is no need for the user to log on the other devices 2 to 4 using the weak user ID / password procedure provided with the other devices 2 to 4.

## Claims

1. A method of providing a user (10) with a centralised login procedure, the user (10) having registered in a login server (6) two or more devices (1 to 4) he is associated with, whereby the method comprises the steps of:
performing a first login procedure with the user (10) on a first device (1) of the two or more devices (1 to 4);
sending login data representative of the first login from the first device (1) to the login server (6);
verifying, by the login server (6), the login data for authentication of the user (10) for the first device (1);
after authentication of the user (10) by the login server (6), accessing credentials associated with the user (10) for the first device (1) and sending said credentials to the first device (1) to unlock the first device (1) for the user (10);
sending a login request from another device (2, 3, 4) of the two or more devices to the login server (6) when said other device (2, 3, 4) is switched on;
checking whether the user (10) is authenticated for the first device (1);
accessing, by the login server. (6), credentials associated with the user (10) for said other device (2, 3, 4) of the two or more devices (1 to 4) and
sending in response to the login request from the login server (6) to said other device (2, 3, 4) said credentials associated with the user (10) for said other device (2, 3, 4) of the two or more devices (1 to 4) if the user (10) is authenticated for the first device (1); and
using the received credentials associated with the user (10) for said other device (2, 3, 4) of the two or more devices (1 to 4) to unlock said other device (2, 3, 4) for the user (10).

2. The method of claim 1,
**characterised in**
**that** the method comprises the further step of:
using a biometric identification method in the first login procedure.

3. The method of claim 1,
**characterised in**
**that** the method comprises the further steps of:
activating at the login server (6) a session for the user (10) after authentication of the user (10) for the first device (1);
sending a login request from the other device (2, 3, 4) to the login server (6) when said other device (2, 3, 4) is switched on;
checking whether an active session for the user (10) exists;
sending in response to the login request, from the login server (6) to said other device (2, 3, 4), credentials associated with the user (10) for said other device (2, 3, 4) if an active session for the user (10) exists.

4. The method of claim 1 or 3,
**characterised in**
**that** the method comprises the further steps of:
activating at the login server (6) a session for the user (10) after authentication of the user (10) for the first device (1);
repeatedly sending to the login server (6) an activity report from the unlocked devices (1 to 4) for confirming the active session for the user (10);
holding the session active for the user (10) as long as the session is confirmed active by receipt of said activity reports.

5. The method of claim 1,
**characterised in**
**that** the method comprises the further steps of:
automatically logging out all of the two or more devices (1 to 4) when the user logs out at one device of the two or more devices (1 to 4).

6. The method of claim 1,
**characterised in**
**that** the method comprises the further steps of:
periodically sending, from a device (2 to 4) to the login server (6), an inquiry regarding the existence of an active session for the user (10) associated with the device (2 to 4);
activating at the login server (6) a session for the user (10) after authentication of the user (10) for the first device (1);
if an active session exists on the login server (6), sending credentials to said device (2 to 4) to unlock the device (2 to 4) for the user (10).

7. The method of claim 1,
**characterised in**
**that** the method comprises the further steps of:
generating random credentials by the login server (6);
replacing the credentials currently associated with the user (10) for one of the two or more devices (1 to 4) by the randomly generated credentials only known to the login server (6).

8. A login server (6) for providing a user (10) with a centralised login procedure, wherein the login server (6) comprises an interface (61 to 64) for enabling communication with two or more devices (1 to 4), a memory (66) for storage of registration data related to the two or more devices (1 to 4) the user (10) is associated with, and a control unit (65) adapted to receive login data representative of a first login performed with the user (10) on a first device (1) of the two or more devices (1 to 4) from the first device (1), verify the login data for authentication of the user (10) for the first device (1), access credentials associated with the user (10) for the first device (1) after authentication of the user (10), transmit said credentials to the first device (1) to unlock the first device (1) for the user (10),
receive a login request sent from another device (2, 3, 4) of the two or more devices to the login server (6) when said other device (2, 3, 4) is switched on, check whether the user (10) is authenticated for the first device (1),
access credentials associated with the user (10) for the other device (2 to 4) of the two or more devices (1 to 4), and trigger in response to the login request the transmission from the login server (6) to said other device (2, 3, 4) of said credentials associated with the user (10) for said other device (2 to 4) of the two or more devices (1 to 4) if the user (10) is authenticated for the first device (1) to unlock the other device (2 to 4) for the user (10).

9. The login server of claim 8,
**characterised in**
**that** the login server (6) further comprises a credentials generation unit (650) adapted to generate credentials for one of the two or more devices (1 to 4).

## Patentansprüche

1. Ein Verfahren, um einem Benutzer (10) eine zentrale Anmeldungsprozedur bereitzustellen, wobei der Benutzer (10) in einem Zugangsserver (6) zwei oder mehr Geräte (1 bis 4) angemeldet hat, mit denen er verbunden ist, wodurch das Verfahren die Schritte umfaßt:
Durchführen einer ersten Anmeldungsprozedur mit dem Benutzer (10) an einem ersten Gerät (1) von zwei oder mehr Geräten (1 bis 4);
Senden der Anmeldungsdaten, die für die erste Anmeldung vom ersten Gerät (1) repräsentativ sind, an den Zugangsserver (6);
Verifizieren durch den Zugangsserver (6) der Anmeldungsdaten zur Authentifizierung des Benutzers (10) für das erste Gerät (1);
nach Authentifizierung des Benutzers (10) durch den Zugangsserver (6) das zugreifen auf die Berechtigungsnachweise, die mit dem Benutzer (10) für das erste Gerät (1) verbunden sind, und
Senden der Berechtigungsnachweise an das erste Gerät (1), um das erste Gerät (1) für den Benutzer (10) zu entsperren;
Senden einer Anmeldungsanforderung von einem anderen Gerät (2, 3, 4) der zwei oder mehr Geräte an den Zugangsserver (6), wenn das andere Gerät (2, 3, 4) eingeschaltet wird; Überprüfen, ob der Benutzer (10) für das erste Gerät (1) authentifiziert ist; zugreifen durch den Zugangsserver (6) auf de Berechtigungsnachweise, die mit dem Benutzer (10) für das andere Gerät (2, 3, 4) der zwei oder mehr Geräte (1 bis 4) verbunden sind, und Senden als Antwort auf die Anmeldungsanforderung vom Zugangsserver (6) an das andere Gerät (2, 3, 4) der Berechtigungsnachweise, die mit dem Benutzer (10) für das andere Gerät (2, 3,4) der zwei oder mehr Geräte (1 bis 4) verbunden sind, wenn der Benutzer (10) für das erste Gerät (1) authentifiziert ist; und
Verwenden der empfangenen Berechtigungsnachweise, die mit dem Benutzer (10) verbunden sind, für das andere Gerät (2, 3,4) der zwei oder mehr Geräte (1 bis 4), um das andere Gerät (2, 3, 4) für den Benutzer (10) zu entsperren.

2. Das Verfahren nach Anspruch 1,
**dadurch gekennzeichnet,**
**daß** das Verfahren den weiteren Schritt umfaßt:
Verwenden eines biometrischen Identifikationsverfahrens in der ersten Anmeldungsprozedur.

3. Das Verfahren nach Anspruch 1,
**dadurch gekennzeichnet.**
**daß** das Verfahren die weiteren Schritte umfaßt:
Aktivieren am Zugangsserver (6) einer Session für den Benutzer (10) nach Authentifizierung des Benutzers (10) für das erste Gerät (1);
Senden einer Anmeldungsanforderung von dem anderen Gerät (2, 3, 4) an den Zugangsserver (6), wenn das andere Gerät (2, 3, 4) eingeschaltet wird;
Überprüfen, ob eine aktive Session für den Benutzer (10) vorhanden ist;
Senden als Antwort auf die Anmeldungsanforderung vom Zugangsserver (6) an das andere Gerät (2, 3,4) der Berechtigungsnachweise, die mit dem Benutzer (10) für das andere Gerät (2, 3,4) verbunden sind, wenn eine aktive Session für den Benutzer (10) vorhanden ist.

4. Das Verfahren nach Anspruch 1 oder 3,
**dadurch gekennzeichnet,**
**daß** das Verfahren die weiteren Schritte umfaßt:
Aktivieren am Zugangsserver (6) einer Session für den Benutzer (10) nach Authentifizierung des Benutzers (10) für das erste Gerät (1);
wiederholtes Senden an den Zugangsserver (6) eines Aktivitätsberichtes von den entsperrten Geräte (1 bis 4) zur Bestätigung der aktiven Session für den Benutzer (10); Aktivhalten der Session für den Benutzer (10) solange wie die Session aktiv durch den Empfang der Aktivitätsberichte bestätigt ist.

5. Das Verfahren nach Anspruch 1,
**dadurch gekennzeichnet,**
**daß** das verfahren die weiteren Schritte umfaßt:
automatisches Abmelden aller oder der zwei oder mehr Geräte (1 bis 4), wenn sich der Benutzer an einem Gerät der zwei oder mehr Geräte (1 bis 4) abmeldet.

6. Das Verfahren nach Anspruch 1,
**dadurch gekennzeichnet,**
**daß** das Verfahren die weiteren Schritte umfaßt:
periodisches Senden von einem Gerät (2 bis 4) an den Zugangsserver (6) einer Anfrage bezüglich des Vorhandenseins einer aktiven Session für den Benutzer (10), der mit dem Gerät (2 bis 4) verbunden ist; Aktivieren am Zugangsserver (6) einer Session für den Benutzer (10) nach Authentifizierung des Benutzers (10) für das erste Gerät (1);
wenn eine aktive Session auf dem Zugangsserver (6) vorhanden ist, Senden der Berechtigungsnachweise an das Gerät (2 bis 4) , um das Gerät (2 bis 4) für den Benutzer (10) zu entsperren.

7. Das Verfahren nach Anspruch 1,
**dadurch gekennzeichnet,**
**daß** das Verfahren die weiteren Schritte umfaßt:
Erzeugen zufälliger Berechtigungsnachweise durch den Zugangsserver (6);
Ersetzen der Berechtigungsnachweise, die momentan mit dem Benutzer (10) für eines der zwei oder mehr Geräte (1 bis 4) verbunden sind, durch die zufällig erzeugten Berechtigungsnachweise, die nur dem Zugangsserver (6) bekannt sind.

8. Ein Zugangsserver (6), um einem Benutzer (10) eine zentrale Anmeldungsprozedur bereitzustellen, in welcher der Zugangsserver (6) umfaßt: eine Schnittstelle (61 bis 64) zum Freigeben der Kommunikation mit zwei oder mehr Geräten (1 bis 4), einen Speicher (66) zum Speichern der Registrierungsdaten, die die zwei oder mehr Geräte (1 bis 4) betreffen, mit denen der Benutzer (10) verbunden ist, und eine Steuereinheit (65), die angepaßt ist, um Anmeldungsdaten zu empfangen, die für eine erste Anmeldung repräsentativ sind, die mit dem Benutzer (10) auf einem ersten Gerät (1) der zwei oder mehr Geräte (1 bis 4) vom ersten Gerät (1) durchgeführt wurde, um Anmeldungsdaten zur Authentifizierung des Benutzers (10) für das erste Gerät (1) zu verifizieren, um auf Berechtigungsnachweise zuzugreifen, die mit dem Benutzer (10) für das erste Gerät (1) nach Authentifizierung des Benutzers (10) verbunden sind, um Berechtigungsnachweise an das erste Gerät (1) zu senden, um das erste Gerät (1) für den Benutzer (10) zu entsperren,
um eine Anmeldungsanforderung zu empfangen, die von einem anderen Gerät (2, 3, 4) der zwei oder mehr Geräte an den Zugangsserver (6) gesendet wurde, wenn das andere Gerät (2, 3, 4) eingeschaltet wird, um zu überprüfen, ob der Benutzer (10) für das erste Gerät (1) authentifiziert ist, um auf Berechtigungsnachweise zuzugreifen, die mit dem Benutzer (10) für das andere Gerät (2 bis 4) der zwei oder mehr Geräte (1 bis 4) verbunden sind, und um als Antwort auf die Anmeldungsanforderung die Übertragung der Berechtigungsnachweise vom Zugangsserver (6) an das andere Gerät (2, 3, 4) auszulösen, die mit dem Benutzer (10) für das andere Gerät (2 bis 4) der zwei oder mehr Geräte (1 bis 4) verbunden sind, wenn der Benutzer (10) für das erste Gerät (1) authentifiziert ist, um das andere Gerät (2 bis 4) für den Benutzer (10) zu entsperren.

9. Der Zugangsserver nach Anspruch 8,
**dadurch gekennzeichnet,**
**daß** der Zugangsserver (6) außerdem eine Berechtungsnachweis-Erzeugungseinheit (650) umfaßt, die angepaßt ist, um Berechtigungsnachweise für eines der zwei oder mehr Geräte (1 bis 4) zu erzeugen.

## Revendications

1. Procédé permettant de fournir à un utilisateur (10) une procédure de connexion centralisée, l'utilisateur (10) ayant enregistré dans un serveur de connexion (6) au moins deux dispositifs (1 à 4) auxquels il est associé, moyennant quoi le procédé comprend les étapes suivantes :
effectuer une première procédure de connexion avec l'utilisateur (10) sur un premier dispositif (1) parmi les au moins deux dispositifs (1 à 4) ;
envoyer des données de connexion de la première connexion depuis le premier dispositif (1) au serveur de connexion (6) ;
vérifier, par le serveur de connexion (6), les données de connexion pour l'authentification de l'utilisateur (10) pour le premier dispositif (1) ;
après l'authentification de l'utilisateur (10) par le serveur de connexion (6), accéder au justificatif d'identité associé à l'utilisateur (10) pour le premier dispositif (1) et envoyer ledit justificatif d'identité au premier dispositif (1) pour déverrouiller le premier dispositif (1) pour l'utilisateur (10) ;
envoyer une demande de connexion depuis un autre dispositif (2, 3, 4) parmi les au moins deux dispositifs (8) quand ledit autre dispositif (2, 3, 4) est commuté en fonction ;
vérifier si l'utilisateur (10) est authentifié pour le premier dispositif (1) ;
accéder, par le serveur de connexion (6), au justificatif d'identité associé à l'utilisateur (10) pour ledit autre dispositif (2, 3, 4) parmi les au moins deux dispositifs (1 à 4) et envoyer en réponse à la demande de connexion provenant du serveur de connexion (6) audit autre dispositif (2, 3, 4) ledit justificatif d'identité associé à l'utilisateur (10) pour ledit autre dispositif (2, 3, 4) parmi les au moins deux dispositifs (1 à 4) si l'utilisateur (10) est authentifié pour le premier dispositif (1) ; et
utiliser le justificatif d'identité reçu associé à l'utilisateur (10) pour ledit autre dispositif (2, 3, 4) parmi les au moins deux dispositifs (1 à 4) pour déverrouiller ledit autre dispositif (2, 3, 4) pour l'utilisateur (10).

2. Procédé selon la revendication 1,
**caractérisé en ce que**
le procédé comprend l'étape supplémentaire suivante:
utiliser un procédé d'identification biométrique dans la première procédure de connexion.

3. Procédé selon la revendication 1,
**caractérisé en ce que**
le procédé comprend les étapes supplémentaires suivantes :
activer au niveau du serveur de connexion (6) une session pour l'utilisateur (10) après l'authentification de l'utilisateur (10) pour le premier dispositif (1) ;
envoyer une demande de connexion depuis l'autre dispositif (2, 3, 4) au serveur de connexion (6) si ledit autre dispositif (2, 3, 4) est commuté en fonction ;
vérifier s'il existe une session active pour l'utilisateur (10) ;
envoyer en réponse à la demande de connexion, depuis le serveur de connexion (6) audit autre dispositif (2, 3, 4), le justificatif d'identité associé à l'utilisateur (10) pour ledit autre dispositif (2, 3, 4) s'il existe une session active pour l'utilisateur (10).

4. Procédé selon la revendication 1 ou 3,
**caractérisé en ce que**
le procédé comprend les étapes supplémentaires suivantes :
activer au niveau du serveur de connexion (6) une session pour l'utilisateur (10) après l'authentification de l'utilisateur (10) pour le premier dispositif (1) ;
envoyer de manière répétée au serveur de connexion (6) un rapport d'activité depuis les dispositifs déverrouillés (1 à 4) pour confirmer la session active pour l'utilisateur (10) ;
maintenir la session active pour l'utilisateur (10) tant que la session est confirmé comme étant active par la réception desdits rapports d'activité.

5. Procédé selon la revendication 1,
**caractérisé en ce que**
le procédé comprend les étapes supplémentaires suivantes :
déconnecter automatiquement tous les au moins deux dispositifs (1 à 4) quand l'utilisateur se déconnecte au niveau d'un dispositif parmi les au moins deux dispositifs (1 à 4).

6. Procédé selon la revendication 1,
**caractérisé en ce que**
le procédé comprend les étapes supplémentaires suivantes:
envoyer périodiquement, depuis un dispositif (2 à 4) au serveur de connexion (6), une interrogation concernant l'existence d'une session active pour l'utilisateur (10) associé au dispositif (2 à 4) ;
activer au niveau du serveur de connexion (6) une session pour l'utilisateur (10) après l'authentification de l'utilisateur (10) pour le premier dispositif (1) ;
s'il existe une session active sur le serveur de connexion (6), envoyer le justificatif d'identité audit dispositif (2 à 4) pour déverrouiller le dispositif (2 à 4) pour l'utilisateur (10).

7. Procédé selon la revendication 1,
**caractérisé en ce que**
le procédé comprend les étapes supplémentaires suivantes : générer un justificatif d'identité aléatoire par le serveur de connexion (6) ;
remplacer le justificatif d'identité actuellement associé à l'utilisateur (10) pour l'un parmi les au moins deux dispositifs (1 à 4) par le justificatif d'identité aléatoire généré uniquement connu du serveur de connexion (6).

8. Serveur de connexion (6) permettant de fournir à un utilisateur (10) une procédure de connexion centralisée, dans lequel le serveur de connexion (6) comprend une interface (61 à 64) destinée à permettre la communication avec au moins deux dispositifs (1 à 4), une mémoire de stockage (66) permettant le stockage des données d'enregistrement associées à les au moins deux dispositifs (1 à 4) auxquels l'utilisateur (10) est associé, et une unité de contrôle (65) adaptée pour recevoir les données de connexion représentatives d'une première connexion effectuée avec l'utilisateur (10) sur un premier dispositif (1) parmi les au moins deux dispositifs (1 à 4) depuis le premier dispositif (1), vérifier les données de connexion pour l'authentification de l'utilisateur (10) pour le premier dispositif (1), accéder au justificatif d'identité associé à l'utilisateur (10) pour le premier dispositif (1) après l'authentification de l'utilisateur (10), transmettre ledit justificatif d'identité au premier dispositif (1) pour déverrouiller le premier dispositif (1) pour l'utilisateur (10),
recevoir une demande de connexion envoyée depuis un autre dispositif (2, 3, 4) parmi les au moins deux dispositifs au serveur de connexion (6) si ledit autre dispositif (2, 3, 4) est commuté en fonction, vérifier si l'utilisateur (10) est authentifié pour le premier dispositif (1),
accéder au justificatif d'identification associé à l'utilisateur (10) pour l'autre dispositif (2 à 4) parmi les au moins deux dispositifs (1 à 4), et déclencher en réponse à la demande de connexion la transmission depuis le serveur de connexion (6) audit autre dispositif (2, 3, 4) dudit justificatif d'identification associé à l'utilisateur (10) pour ledit autre dispositif (2 à 4) parmi les au moins deux dispositifs (1 à 4) si l'utilisateur (10) est authentifié pour le premier dispositif (1) pour déverrouiller l'autre dispositif (2 à 4) pour l'utilisateur (10).

9. Serveur de connexion selon la revendication 8,
**caractérisé en ce que**
le serveur de connexion (6) comprend en outre une unité de génération de justificatifs d'identité (650) adaptée pour générer un justificatif d'identité pour l'un parmi les au moins deux dispositifs (1 à 4).
